# EUROPÄISCHE PATENTSCHRIFT

(11) **EP 1 009 181 B1**
(45) Veröffentlichungstag und Bekanntmachung des Hinweises auf die Patenterteilung: **07.09.2005**
(21) Anmeldenummer: 99440341.8
(22) Anmeldetag: 02.12.1999
(51) Int. Cl.: H04Q 7/32

(54) **Verfahren zum Freischalten einer SIM-Karte**
Method for activating a SIM card
Procédé pour activer une card SIM

(30) Priorität: 11.12.1998 DE 19857210
(43) Veröffentlichungstag der Anmeldung: 14.06.2000
(73) Patentinhaber: ALCATEL, 75008 Paris (FR)
(72) Erfinder: Hägebarth, Frank, 74366 Kirchheim (DE)
(74) Vertreter: Haines, Miles John L.S.

(56) Entgegenhaltungen:
- EP-A- 0 367 361
- EP-A- 0 778 716
- WO-A-97/22221
- US-A- 5 297 192

## Beschreibung

Die vorliegende Erfindung betrifft ein Verfahren zum Freischalten einer Subscribe-Identify-Module (SIM)-Karte eines Mobiltelefons zur Nutzung in einem Mobilfunk-Netzwerk für einen Mobilfunk-Kunden für ein Leistungsmerkmal oder zum Ändern eines Leistungsmerkmals, für das die SIM-Karte freigeschaltet ist.

Die Erfindung betrifft außerdem eine Vorrichtung zur Durchführung eines Verfahrens zum Freischalten einer Subscribe-Identify-Module (SIM)-Karte eines Mobiltelefons zur Nutzung in einem Mobilfunk-Netzwerk für einen Mobilfunk-Kunden für ein Leistungsmerkmal oder zum Ändern eines Leistungsmerkmals, für das die SIM-Karte freigeschaltet ist. Die Vorrichtung umfasst ein Kommunikationsnetzwerk und kann über ein Endgerät durch den Mobilfunk-Kunden angewählt werden.

Derartige Verfahren und Vorrichtungen sind in unterschiedlichen Ausführungsformen aus dem Stand der Technik bekannt. Wenn ein Mobilfunk-Kunde ein Mobiltelefon in einem Mobilfunk-Netzwerk nutzen möchte, muss er zunächst ein Mobiltelefon und eine SIM-Karte erwerben. Die SIM-Karte weist einen kleinen Speicherchip auf, auf dem bspw. die Kartennummer der SIM-Karte, Angaben zur Identifikation des Kunden und mehrere Namen mit Rufnummern abgespeichert werden können. Um das Mobiltelefon in dem Mobilfunk-Netzwerk betreiben zu können, muss die SIM-Karte erst von einem Mobilfunk-Netzwerkbetreiber freigeschaltet werden. Im Rahmen des Freischaltens wird die SIM-Karte einem bestimmten Kunden zugeordnet, wird die Anschrift und Bankverbindung des Kunden bei dem Mobilfunk-Netzwerkbetreiber gespeichert, wird die Bonität des Kunden überprüft, werden die von dem Kunden gewünschten Leistungsmerkmale (Tarif, Roaming, Einzelaufstellung der Telefonverbindungen in der Rechnung, etc.) festgelegt und der SIM-Karte eine Mobilfunk-Telefonnummer zugewiesen, unter der der Kunde dann im Mobilfunk-Netzwerk erreichbar ist. Wenn nun die SIM-Karte in das Mobiltelefon eingelegt ist, kann der Kunde von dem Mobiltelefon telefonieren und über seine Mobilfunk-Telefonnummer angerufen werden.

Das Freischalten der SIM-Karte nach dem bekannten Verfahren erfolgt üblicherweise in den nachfolgend aufgeführten Schritten. Zunächst füllt der Kunde bei einem Händler einen Mobilfunkvertrag aus und unterschreibt diesen. In dem Vertrag werden die Angaben zur Identifikation des Kunden, die Anschrift und die Bankverbindung des Kunden eingetragen. Auf dem Mobilfunkvertrag wird auch die Kartennummer einer SIM-Karte angegeben, die für den Kunden freigeschaltet werden soll. Außerdem wird eine Mobilfunk-Telefonnummer angegeben, der die SIM-Karte zugewiesen werden soll und unter der der Kunde dann im Mobilfunk-Netzwerk erreichbar sein wird. Schließlich werden in dem Vertrag die von dem Kunden gewünschten Leistungsmerkmale festgelegt. Der ausgefüllte Vertrag wird dann, üblicherweise per Telefax, an den Mobilfunk-Netzwerkbetreiber übermittelt. Dort werden die Angaben durch Personal des Netzwerkbetreibers manuell gespeichert, wird die Bonität des Kunden überprüft, wird der SIM-Karte die angegebene Rufnummer zugewiesen und die SIM-Karte für die gewünschten Leistungsmerkmale freigeschaltet. Für diese Vorgänge zum Freischalten der SIM-Karte benötigt der Mobilfunk-Netzwerkbetreiber üblicherweise ein bis zwei Werktage. Eine wesentlich raschere Freischaltung einer SIM-Karte wäre jedoch vorteilhaft.

Das Freischalten der SIM-Karten und das Ändern der Leistungsmerkmale der Mobilfunkverträge bei dem Mobilfunk-Netzwerkbetreiber soll in möglichst kurzer Zeit erfolgen. Dazu muss der Netzwerkbetreiber einen entsprechenden Personalbestand vorhalten, was einen erheblichen Kostenfaktor darstellt.

Das Verfahren zum Freischalten einer SIM-Karte eines Mobiltelefons erfolgt nach dem Stand der Technik nicht unmittelbar bei dem Mobilfunk-Netzwerkbetreiber, sondern über einen oder mehrere Händler, die jeweils eine Provision für den Vertragsabschluß erhalten. Dadurch werden die Kosten für den Abschluss eines Mobilfunkvertrags recht hoch.

Andererseits wäre auch ein Direktvertrieb der Mobilfunkverträge durch die Mobilfunk-Netzwerkbetreiber über ein eigenes Händlernetz sehr aufwendig und mindestens ebenso teuer wie der Vertrieb über einen oder mehrere externe Händler, da ein eigenes Händlernetz in der Regel erst aufgebaut werden müsste. Ein Direktvertrieb durch die Mobilfunk-Netzwerkbetreiber über ein eigenes Händlernetz wäre also zur Reduzierung der Kosten für den Abschluss eines Mobilfunkvertrags nicht geeignet.

Durch das Zwischenschalten mehrerer Händler ist dem Mobilfunk-Netzwerkbetreiber ein direkter Zugriff auf die Kunden verwehrt. Marketing-Aktionen seitens des Mobilfunk-Netzwerkbetreibers müssen so über den Umweg eines oder mehrerer Händler laufen.

Aus der WO 97/22221 ist ein Verfahren der eingangs genannte Art bekannt. Dies Druckschrift geht aus von einem Mobiltelefon, das zur Nutzung eines Mobilfunk-Netzwerks vorgesehen ist. Bei dem beschriebenen Verfahren kann von dem Mobiltelefon ausschließlich über das Mobilfunk-Netzwerk eine SIM-Karte des Mobiltelefons freigeschaltet oder können die Leistungsmerkmale der SIM-Karte geändert werden. Das Freischalten oder Ändern der Leistungsmerkmale der SIM-Karte ausschließlich mittels des Mobiltelefons über das Mobilfunk-Netzwerk ist relativ starr und unflexibel, unkomfortabel und recht langsam.

Aus den vorgenannten Nachteilen des Standes der Technik ergibt sich somit eine Aufgabe der vorliegenden Erfindung, das Freischalten von SIM-Karten zu beschleunigen, die Kosten zum Freischalten zu reduzieren und den Mobilfunk-Netzwerkbetreibern ohne großen zusätzlichen Aufwand und ohne große zusätzliche Kosten einen direkten Zugriff auf ihre Kunden zu ermöglichen.

Zur Lösung dieser Aufgabe schlägt die Erfindung ein Verfahren der eingangs genannten Art vor, das gekennzeichnet ist durch die nachfolgenden Schritte:
- Anwahl eines Kommunikationsnetzwerks, das nicht das Mobilfunk-Netzwerk ist, durch den Kunden über ein Endgerät, das nicht das Mobiltelefon ist,
- Herstellen einer Datenübertragungsverbindung von dem Endgerät zu einem Mobilfunk-Netzwerkbetreiber über das Kommunikationsnetzwerk,
- Ermittlung der Identität des Kunden,
- Durchlaufen eines computergestützten Dialogs, der zumindest die Ermittlung der Kartennummer der SIM-Karte umfasst,
- Übermittlung der Identität des Kunden, der Kartennummer der SIM-Karte und des Leistungsmerkmals an den Mobilfunk-Netzwerkbetreiber über die Datenübertragungsverbindung, und
- Eingabe der übermittelten Daten in eine Datenbank des Mobilfunk-Netzwerkbetreibers.

Das erfindungsgemäße Verfahren geht davon aus, dass die Mobilfunk-Netzwerkbetreiber SIM-Karten kostenlos in Umlauf bringen. Das könnte bspw. im Rahmen einer Marketing-Aktion oder als Beilage in Zeitschriften geschehen.

Ein potentieller Kunde wird durch das erfindungsgemäße Verfahren in die Lage versetzt, eine erhaltene SIM-Karte ohne Zwischenschalten von Händlern für bestimmte Dienste oder Leistungsmerkmale selbständig freischalten zu können. Ebenso ist ein potentieller Kunde mit dem erfindungsgemäßen Verfahren in der Lage, die eingestellten Dienste oder Leistungsmerkmale jederzeit selbständig zu ändern.

Ermöglicht wird dies dadurch, dass der potentielle Kunde ein Kommunikationsnetzwerk über ein Endgerät anwählt. Dieses Kommunikationsnetzwerk weist vorzugsweise eine zentrale Komponente auf, die gewisse Netzwerkfunktionen des Kommunikationsnetzwerks steuert. Ein derart ausgebildetes Kommunikationsnetzwerk wird in der Kommunikationstechnik auch als Intelligentes Netzwerk bezeichnet. Das Endgerät kann vorzugsweise als ein Telefon oder als ein Computer ausgebildet sein. Die Anwahl des Kommunikationsnetzwerks kann über ein Telefon-Netzwerk oder über ein Computer-Netzwerk erfolgen. Das Computer-Netzwerk ist vorzugsweise als das Internet ausgebildet. Falls das Kommunikationsnetzwerk als ein Intelligentes Netzwerk ausgebildet ist, wird die zentrale Komponente in dem Kommunikationsnetzwerk über das Endgerät angewählt und eine Verbindung zu der zentralen Komponente hergestellt. Um das Intelligente Netzwerk über ein Computer-Netzwerk anwählen zu können, muss das Kommunikationsnetzwerk einen Computer aufweisen, der in das Computer-Netzwerk integriert ist. Der Zugriff auf das Intelligente Netzwerk erfolgt dann durch Aufruf der Internet-Adresse des Computers des Kommunikationsnetzwerks.

Zur Anwahl des Kommunikationsnetzwerks wählt der potentielle Kunde entweder eine Telefonnummer des Kommunikationsnetzwerks oder die Adresse des Computers des Kommunikationsnetzwerks. Nachdem die Verbindung zu dem Kommunikationsnetzwerk hergestellt ist, wird zunächst die Identität des potentiellen Kunden ermittelt. Dann wird ein computergestützter Dialog durchlaufen. Im Rahmen dieses Dialogs wird zumindest die Kartennummer der SIM-Karte ermittelt. Es ist jedoch denkbar, dass das Kommunikationsnetzwerk im Rahmen des computergestützten Dialogs auch beliebige andere Angaben erhält. Anschließend wird die Identität des Kunden, die Kartennummer der SIM-Karte und das Leistungsmerkmal über eine Datenübertragungsverbindung an den Mobilfunk-Netzwerkbetreiber übermittelt. Bei dem Netzwerkbetreiber werden die übermittelten Daten schließlich in einer Datenbank gespeichert.

Durch das erfindungsgemäße Verfahren kann das Freischalten von SIM-Karten entscheidend beschleunigt werden. Da der Kunde seine SIM-Karte selbständig freischalten und die eingestellten Leistungsmerkmale, für die seine SIM-Karte freigeschaltet ist, selbständig ändern kann, kann bei dem Mobilfunk-Netzwerkbetreiber das Personal eingespart werden, das bisher für diese Tätigkeiten zuständig war. Dadurch können die Kosten zum Freischalten und Verwalten der SIM-Karten reduziert werden. Durch den Verzicht auf zwischengeschaltete Händler erhalten die Mobilfunk-Netzwerkbetreiber schließlich ohne großen zusätzlichen Aufwand und ohne große zusätzliche Kosten einen direkten Zugriff auf ihre Kunden. Dadurch können gezielte Marketing-Aktionen ohne zeitliche Verzögerung aufgrund der zwischengeschalteten Händler durchgeführt werden.

Falls das Kommunikationsnetzwerk als ein Intelligentes Netzwerk ausgebildet ist, wird die Identität des Kunden vorzugsweise in der zentralen Komponente des Kommunikationsnetzwerks ermittelt. Dann läuft der computergestützte Dialog auf der zentralen Komponente des Kommunikationsnetzwerks ab und/oder die Identität des Kunden, die Kartennummer der SIM-Karte und das Leistungsmerkmal wird von der zentralen Komponente an den Mobilfunk-Netzwerkbetreiber übermittelt.

Gemäß einer vorteilhaften Weiterbildung der vorliegenden Erfindung wird der SIM-Karte beim Freischalten eine Mobilfunk-Telefonnummer zugewiesen. Unter dieser Telefonnummer wird der Kunde dann in Zukunft in dem Mobilfunk-Netzwerk zu erreichen sein.

Gemäß einer bevorzugten Ausführungsform der Erfindung wird vorgeschlagen, dass die Identität des Kunden von dem Kunden selbst über die Verbindung zu dem Kommunikationsnetzwerk manuell übermittelt wird. Der Kunde kann bspw. Angaben zu seiner Identität über die Tastatur des Telefons, mit dem er eine Verbindung zu dem Kommunikationsnetzwerk hergestellt hat, eingeben und an das Kommunikationsnetzwerk übermitteln. Es ist auch denkbar, dass der Kunde auf einer entsprechenden Seite im Internet die Angaben zu seiner Identität über die Tastatur eines Computers eingibt und an das Kommunikationsnetzwerk übermittelt.

Alternativ wird vorgeschlagen, dass die Identifikationsnummer des Endgeräts über die Verbindung zu dem Kommunikationsnetzwerks automatisch übermittelt wird und dass die Identität des Kunden aus der Identifikationsnummer durch die zentrale Komponente des Kommunikationsnetzwerks ermittelt wird. Automatisch bedeutet hier, dass die Übermittlung ohne Zutun des potentiellen Kunden geschieht. Diese Ausführungsform ist insbesondere für solche Netzwerkbetreiber interessant, die neben dem Mobilfunk-Netzwerk auch ein Festnetz betreiben. Zum Freischalten seiner SIM-Karte kann der Kunde des Mobilfunk-Netzwerks dann sein Festnetz-Telefon des gleichen Netzwerkbetreibers verwenden. Da der potentielle Mobilfunk-Kunde bereits Festnetz-Kunde bei diesem Netzwerkbetreiber ist, sind in einer Datenbank des Netzwerkbetreibers die Angaben zur Identität des Festnetz-Kunden gespeichert. Aus der Identifikationsnummer des Festnetz-Telefons, die automatisch an das Kommunikationsnetzwerk übermittelt wird, kann das Kommunikationsnetzwerk dann die Angaben über die Identität des Festnetz-Kunden aus der Datenbank entnehmen, die dann als Angaben über die Identität des Mobilfunk-Kunden verwendet werden können.

Desgleichen kann auch bei einer Herstellung der Verbindung über ein Computer-Netzwerk die Identifikationsnummer des Kunden innerhalb des Computer-Netzwerks automatisch an das Kommunikationsnetzwerk übermittelt werden. Aus der Identifikationsnummer des Kunden kann das Kommunikationsnetzwerk dann die Angaben über die Identität des Kunden, bspw. aus einer Datenbank, ermitteln.

Gemäß einer bevorzugten Ausführungsform der Erfindung wird die Kartennummer der SIM-Karte von dem Kunden selbst über die Verbindung zu dem Kommunikationsnetzwerk manuell übermittelt. Die Übermittlung der Kartennummer erfolgt über ein Telefon, ein Computer oder ein anderes Eingabegerät mittels einer Tastatur, mittels Sprachsteuerung oder auf andere Weise.

Gemäß einer besonders vorteilhaften Weiterbildung der Erfindung wird vorgeschlagen, dass der computergestützte Dialog mittels Sprachbefehle oder mittels des Dial-Tone-Multi-Frequency (DTMF)-Verfahrens durch den Kunden durchgeführt wird. Dazu muss das Kommunikationsnetzwerk Mittel aufweisen, welche die Sprachbefehle, bzw. die Tastentöne in die entsprechenden Befehle umwandeln. Die Sprachbefehle bzw. die Tastentöne werden über die Verbindung, die zwischen dem Telefon und dem Kommunikationsnetzwerk hergestellt ist, übermittelt und erst in dem Kommunikationsnetzwerk, vorzugsweise von der zentralen Komponente des Intelligenten Netzwerks, in die entsprechenden Befehle zur Durchführung des computergestützten Dialogs umgewandelt. Auch die Eingabe von Angaben bzgl. der Identität des potentiellen Kunden und die Eingabe der Kartennummer der SIM-Karte kann über Sprachbefehle oder über das DTMF-Verfahren erfolgen. Gemäß einer bevorzugten Ausführungsform wird im Rahmen des computergestützten Dialogs mindestens eine Abfrage zur Verifikation der Identität des Kunden durchgeführt. Diese Abfrage kann bspw. in der Abfrage einer Persönlichen-Identifikations-Nummer (PIN) oder in der Abfrage anderer personenspezifischer Daten, wie bspw. der Nummer des Personalausweises o. ä., bestehen.

Vorteilhafterweise wird im Rahmen des computergestützten Dialogs mindestens eine Abfrage zur Bestimmung eines Leistungsmerkmals durchgeführt. Beim Freischalten der SIM-Karte können dadurch die gewünschten Dienste/Leistungsmerkmale erstmals eingestellt werden. Bei einer bereits freigeschalteten SIM-Karte können dadurch die eingestellten Leistungsmerkmale bequem und schnell geändert werden.

Damit der Kunde über ein erfolgreiches Freischalten seiner SIM-Karte und/oder über ein erfolgreiches Ändern eines Leistungsmerkmals seiner SIM-Karte informiert ist, schlägt die Erfindung gemäß einer vorteilhaften Weiterbildung vor, dass der Kunde über das erfolgreiche Freischalten der SIM-Karte oder über das erfolgreiche Ändern eines Leistungsmerkmals durch eine Short-Message-Service (SMS)-Nachricht oder durch eine Electronic-Mail (E-Mail) benachrichtigt wird. Dem Kunden werden in der Benachrichtigung vorteilhafterweise die eingestellten Leistungsmerkmale übermittelt. Ebenso kann der Kunde über eine nicht erfolgte Freischaltung der SIM-Karte bzw. über eine nicht erfolgte Änderung der Leistungsmerkmale und darüber informiert werden, welche Probleme während des Freischaltens oder während des Änderns aufgetreten sind.

Zur Lösung der genannten Aufgabe schlägt die Erfindung des weiteren eine Vorrichtung der eingangs genannten Art vor, die dadurch gekennzeichnet ist, dass
- das Kommunikationsnetzwerk nicht das Mobilfunk-Netzwerk ist, und
- das Endgerät nicht das Mobiltelefon ist,
wobei die Vorrichtung aufweist:
- Mittel zum Herstellen einer Datenübertragungsverbindung von dem Endgerät zu einem Mobilfunk-Netzwerkbetreiber über das Kommunikationsnetzwerk,
- Mittel zur Ermittlung der Identität des Kunden,
- Mittel zum Durchlaufen eines computergestützten Dialogs mit dem Kunden, wobei der Dialog zumindest die Ermittlung der Kartennummer der SIM-Karte umfasst,
- Mittel zur Übermittlung der Identität des Kunden, der Kartennummer der SIM-Karte und des Leistungsmerkmals an den Mobilfunk-Netzwerkbetreiber über die Datenübertragungsverbindung, und
- Mittel zur Eingabe der übermittelten Daten in eine Datenbank des Netzwerkbetreibers.

Gemäß einer vorteilhaften Weiterbildung der Erfindung wird vorgeschlagen, dass die Vorrichtung als ein Kommunikationsnetzwerk ausgebildet ist, das eine zentrale Komponente zur Steuerung bestimmter Netzwerkfunktionen des Kommunikationsnetzwerks aufweist. Ein derartig ausgebildetes Netzwerk wird in der Kommunikationstechnik auch als Intelligentes Netzwerk bezeichnet.

Das Endgerät, über das ein Mobilfunk-Kunde das Kommunikationsnetzwerk anwählt und über das eine Verbindung zwischen dem Kunden und dem Kommunikationsnetzwerk hergestellt wird, ist vorzugsweise als ein Telefon ausgebildet. Alternativ wird vorgeschlagen, daß das Endgerät als ein Computer ausgebildet ist. Der Computer ist vorteilhafterweise Teil eines Computer-Netzwerks. Das Computer-Netzwerk ist vorzugsweise als ein weltweites Datenübertragungs- und Informations-Netzwerk, insbesondere als das Internet, ausgebildet.

Falls das Kommunikationsnetzwerk als ein Intelligentes Netzwerk ausgebildet ist, sind die Mittel zur Ermittlung der Identität des Kunden gemäß einer bevorzugten Ausführungsform der vorliegenden Erfindung als die zentrale Komponente des Kommunikationsnetzwerks ausgebildet. Ebenso wird vorgeschlagen, daß die Mittel zum Durchlaufen eines computergestützten Dialogs als die zentrale Komponente des Kommunikationsnetzwerks ausgebildet sind.

Gemäß einer besonders bevorzugten Ausführungsform wird vorgeschlagen, daß die Mittel zur Ermittlung der Identität des Kunden über die Verbindung Angaben empfangen, die der Kunde bezüglich seiner Identität macht und an die Vorrichtung über die Verbindung übermittelt.

Gemäß einer bevorzugten Ausführungsform wird vorgeschlagen, daß die Mittel zur Ermittlung der Identität des Kunden über die Verbindung zwischen dem Endgerät und dem Kommunikationsnetzwerk die Identifikationsnummer des Endgeräts empfangen und die Identität des Kunden aus der Identifikationsnummer ermitteln. Falls der potentielle Mobilfunk-Kunde bereits Festnetz-Kunde bei demselben Netzwerkbetrieber ist, können die Mittel zur Ermittlung der Identität des Kunden auf einen Datenbestand des Netzwerkbetreibers zugreifen und anhand der Identifikationsnummer die Angaben zur Identität des Kunden ermitteln.

Gemäß einer besonders bevorzugten Ausführungsform ist die Vorrichtung sprachgesteuert oder kann über die Tastatur eine Telefons, das nach dem Dial-Tone-Multi-Frequency-Verfahren arbeitet, gesteuert werden. Dazu schlägt die Erfindung vor, daß die Mittel zum Durchlaufen des computergestützten Dialogs Mittel zur Steuerung des Dialogs mittels Sprache oder mittels des Dial-Tone-Multi-Frequency (DTMF)-Verfahrens aufweisen.

Gemäß einer bevorzugten Ausführungsform weisen die Mittel zum Durchlaufen des computergestützten Dialogs Mittel zur Verifikation der Identität des Kunden auf. Dadurch kann der Mißbrauch bei der Freischaltung oder der Änderung von Leistungsmerkmalen einer SIM-Karte durch nicht befugte Personen verhindert werden. Ebenso weisen die Mittel zum Durchlaufen des computergestützten Dialogs vorzugsweise Mittel zur Bestimmung eines Leistungsmerkmals auf. Mit Hilfe dieser Mittel zur Bestimmung der Leistungsmerkmale können die gewünschten Dienste und/oder Leistungsmerkmale eingestellt bzw. geändert werden.

Gemäß einer bevorzugten Ausführungsform weist die Vorrichtung Mittel zur Benachrichtigung des Kunden über das erfolgreiche Freischalten der SIM-Karte oder über das erfolgreiche Ändern eines Leistungsmerkmals durch eine Short-Message-Service (SMS)-Nachricht oder durch eine Electronic Mail (E-Mail) auf. Vorteilhafterweise übermitteln die Mittel zur Benachrichtigung des Kunden in der Benachrichtigung die eingestellten Leistungsmerkmale.

## Patentansprüche

1. Verfahren zum Freischalten einer Subscribe-Identify-Module -Karte, kurz SIM-Karte, eines Mobiltelefons zur Nutzung in einem Mobilfunk-Netzwerk für einen Mobilfunk-Kunden für ein Leistungsmerkmal oder zum Ändern eines Leistungsmerkmals, für das die SIM-Karte freigeschaltet ist, **gekennzeichnet durch** die nachfolgenden Schritte:
- Anwahl eines Kommunikationsnetzwerks, das nicht das Mobilfunk-Netzwerk ist, **durch** den Kunden über ein Endgerät, das nicht das Mobiltelefon ist,
- Herstellen einer Datenübertragungsverbindung von dem Endgerät zu einem Mobilfunk-Netzwerkbetreiber über das Kommunikationsnetzwerk,
- Ermittlung der Identität des Kunden,
- Durchlaufen eines computergestützten Dialogs, der zumindest die Ermittlung der Kartennummer der SIM-Karte umfasst,
- Übermittlung der Identität des Kunden, der Kartennummer der SIM-Karte und des Leistungsmerkmals an den Mobilfunk-Netzwerkbetreiber über die Datenübertragungsverbindung, und
- Eingabe der übermittelten Daten in eine Datenbank des Mobilfunk-Netzwerkbetreibers.

2. Verfahren nach Anspruch 1, **dadurch gekennzeichnet; dass** eine zentrale Komponente zur Steuerung bestimmter Netzwerkfunktionen in dem Kommunikationsnetzwerk über das Endgerät angewählt und eine Verbindung zu der zentralen Komponente hergestellt wird.

3. Verfahren nach Anspruch 2, **dadurch gekennzeichnet, dass** die Identität des Kunden in der zentralen Komponente ermittelt wird, dass der computergestützte Dialog auf der zentralen Komponente abläuft und/oder dass die Identität des Kunden, die Kartennummer der SIM-Karte und das Leistungsmerkmal von der zentralen Komponente an den Mobilfunk-Netzwerkbetreiber übermittelt wird.

4. Verfahren nach einem der Ansprüche 1 bis 3, **dadurch gekennzeichnet, dass** der SIM-Karte beim Freischalten eine Mobilfunk-Telefonnummer zugewiesen wird.

5. Verfahren nach einem der Ansprüche 2 bis 4, **dadurch gekennzeichnet, dass** die Identität des Kunden von dem Kunden selbst über die Datenübertragungsverbindung an das Kommunikationsnetzwerk manuell übermittelt wird.

6. Verfahren nach einem der Ansprüche 2 bis 4, **dadurch gekennzeichnet, dass** eine Identifikationsnummer des Endgeräts über die Datenübertragungsverbindung an das Kommunikationsnetzwerk automatisch übermittelt wird und dass die Identität des Kunden durch die zentrale Komponente des Kommunikationsnetzwerks aus der Identifikationsnummer ermittelt wird.

7. Verfahren nach einem der Ansprüche 1 bis 6, **dadurch gekennzeichnet, dass** die Kartennummer der SIM-Karte von dem Kunden selbst über die Datenübertragungsverbindung an das Kommunikationsnetzwerk manuell übermittelt wird.

8. Verfahren nach einem der Ansprüche 1 bis 6, **dadurch gekennzeichnet, dass** die Kartennummer der SIM-Karte über die Datenübertragungsverbindung an das Kommunikationsnetzwerk automatisch übermittelt wird.

9. Verfahren nach einem der Ansprüche 1 bis 8, **dadurch gekennzeichnet, dass** der computergestützte Dialog mittels Sprachbefehle oder mittels des Dial-Tone-Multi-Frequency -Verfahrens durch den Kunden durchgeführt wird.

10. Verfahren nach einem der Ansprüche 1 bis 9, **dadurch gekennzeichnet, dass** im Rahmen des computergestützten Dialogs mindestens eine Abfrage zur Verifikation der Identität des Kunden durchgeführt wird.

11. Verfahren nach einem der Ansprüche 1 bis 10, **dadurch gekennzeichnet, dass** im Rahmen des computergestützten Dialogs mindestens eine Abfrage zur Bestimmung des Leistungsmerkmals durchgeführt wird.

12. Verfahren nach einem der Ansprüche 1 bis 11, **dadurch gekennzeichnet, dass** der Kunde über ein erfolgreiches Freischalten der SIM-Karte oder über ein erfolgreiches Ändern eines Leistungsmerkmals durch eine Short-Message-Service -Nachricht oder durch eine Electronic Mail benachrichtigt wird.

13. Verfahren nach Anspruch 12, **dadurch gekennzeichnet, dass** dem Kunden in der Benachrichtigung die eingestellten Leistungsmerkmale übermittelt werden.

14. Vorrichtung zur Durchführung eines Verfahrens zum Freischalten einer Subscribe-Identify-Module, kurz SIM-Karte, -Karte eines Mobiltelefons zur Nutzung in einem Mobilfunk-Netzwerk für einen Mobilfunk-Kunden für ein Leistungsmerkmal oder zum Ändern eines Leistungsmerkmals, für das die SIM-Karte freigeschaltet ist, wobei die Vorrichtung ein Kommunikationsnetzwerk umfasst und über ein Endgerät durch den Mobilfunk-Kunden anwählbar ist, **dadurch gekennzeichnet, dass**
- das Kommunikationsnetzwerk nicht das Mobilfunk-Netzwerk ist,
- das Endgerät nicht das Mobiltelefon ist, und die Vorrichtung aufweist:
- Mittel zum Herstellen einer Datenübertragungsverbindung von dem Endgerät zu einem Mobilfunk-Netzwerkbetreiber über das Kommunikationsnetzwerk,
- Mittel zur Ermittlung der Identität des Kunden,
- Mittel zum Durchlaufen eines computergestützten Dialogs mit dem Kunden, wobei der Dialog zumindest die Ermittlung der Kartennummer der SIM-Karte umfasst,
- Mittel zur Übermittlung der Identität des Kunden, der Kartennummer der SIM-Karte und des Leistungsmerkmals an den Mobilfunk-Netzwerkbetreiber über die Datenübertragungsverbindung, und
- Mittel zur Eingabe der übermittelten Daten in eine Datenbank des Netzwerkbetreibers.

15. Vorrichtung nach Anspruch 14, **dadurch gekennzeichnet, dass** die Vorrichtung ein Kommunikationsnetzwerk umfasst, das eine zentrale Komponente zur Steuerung bestimmter Netzwerkfunktionen des Kommunikationsnetzwerks aufweist.

16. Vorrichtung nach Anspruch 14 oder 15, **dadurch gekennzeichnet, dass** das Endgerät als ein Telefon ausgebildet ist.

17. Vorrichtung nach Anspruch 14 oder 15, **dadurch gekennzeichnet, dass** das Endgerät als ein Computer ausgebildet ist.

18. Vorrichtung nach Anspruch 17, **dadurch gekennzeichnet, dass** der Computer Teil eines Computer-Netzwerks ist.

19. Vorrichtung nach Anspruch 18, **dadurch gekennzeichnet, dass** das Computer-Netzwerk als ein weltweites Datenübertragungs- und Informations-Netzwerk, insbesondere als das Internet, ausgebildet ist.

20. Vorrichtung nach einem der Ansprüche 15 bis 19, **dadurch gekennzeichnet, dass** die Mittel zur Ermittlung der Identität des Kunden als die zentrale Komponente des Kommunikationsnetzwerks ausgebildet sind.

21. Vorrichtung nach einem der Ansprüche 15 bis 20, **dadurch gekennzeichnet, dass** die Mittel zum Durchlaufen eines computergestützten Dialogs als die zentrale Komponente des Kommunikationsnetzwerks ausgebildet sind.

22. Vorrichtung nach einem der Ansprüche 15 bis 21, **dadurch gekennzeichnet, dass** die Mittel zur Ermittlung der Identität des Kunden über die Datenübertragungsverbindung Angaben empfangen, die der Kunde bezüglich seiner Identität macht, und an die Vorrichtung über die Datenübertragungsverbindung übermittelt.

23. Vorrichtung nach einem der Ansprüche 15 bis 21, **dadurch gekennzeichnet, dass** die Mittel zur Ermittlung der Identität des.Kunden über die Datenübertragungsverbindung eine Identifikationsnummer des Endgeräts empfangen und die Identität des Kunden aus der Identifikationsnummer ermitteln.

24. Vorrichtung nach einem der Ansprüche 14 bis 23, **dadurch gekennzeichnet, dass** die Mittel zum Durchlaufen des computergestützten Dialogs Mittel zur Steuerung des Dialogs mittels Sprache oder mittels eines Dial-Tone-Multi-Frequency -Verfahrens aufweisen.

25. Vorrichtung nach einem der Ansprüche 14 bis 24, **dadurch gekennzeichnet, dass** die Mittel zum Durchlaufen des computergestützten Dialogs Mittel zur Verifikation der Identität des Kunden aufweisen.

26. Vorrichtung nach einem der Ansprüche 14 bis 25, **dadurch gekennzeichnet, dass** die Mittel zum Durchlaufen des computergestützten Dialogs Mittel zur Bestimmung eines Leistungsmerkmals aufweisen.

27. Vorrichtung nach einem der Ansprüche 14 bis 26, **dadurch gekennzeichnet, dass** die Vorrichtung Mittel zur Benachrichtigung des Kunden über ein erfolgreiches Freischalten der SIM-Karte oder über ein erfolgreiches Ändern eines Leistungsmerkmals durch eine Short-Message-Service -Nachricht oder durch eine Electronic Mail aufweist.

28. Vorrichtung nach Anspruch 27, **dadurch gekennzeichnet, dass** die Mittel zur Benachrichtigung des Kunden in der Benachrichtigung die eingestellten Leistungsmerkmale übermitteln.

## Claims

1. Procedure for enabling a Subscriber Identity Module card, in short a SIM card, of a mobile telephone for use in a mobile telephony network for a mobile telephony customer, for a feature or for changing a feature for which the SIM card is enabled, **characterized by** the following steps:
- selection of a communications network, which is not the mobile telephony network, by the customer, via a terminal which is not the mobile telephone,
- establishment of a data transmission connection from the terminal to a mobile telephony network operator via the communications network,
- ascertainment of the identity of the customer,
- performance of a computer-aided dialogue which comprises at least the ascertainment of the card number of the STM card,
- communication of the identity of the customer, the card number of the SIM card and the feature to the mobile telephony network operator, via the data transmission connection, and
- input of the communicated data into a databank of the mobile telephony network operator.

2. Procedure according to Claim 1, **characterized in that** a central component for controlling certain network functions in the communications network is dialled-up via the terminal and a connection is established to the central component.

3. Procedure according to Claim 2, **characterized in that** the identity of the customer is ascertained in the central component, the computer-aided dialogue is executed on the central component and/or the identity of the customer, the card number of the SIM card and the feature are communicated to the mobile telephony network operator by the central component.

4. Procedure according to any one of Claims 1 to 3, **characterized in that**, upon the SIM card being enabled, a mobile telephony telephone number is allocated to said SIM card.

5. Procedure according to any one of Claims 2 to 4, **characterized in that** the identity of the customer is manually communicated to the communications network by the customer themselves, via the data transmission connection.

6. Procedure according to any one of Claims 2 to 4, **characterized in that** an identification number of the terminal is automatically communicated to the communications network via the data transmission connection, and the identity of the customer is ascertained from the identification number by the central component of the communications network.

7. Procedure according to any one of Claims 1 to 6, **characterized in that** the card number of the SIM card is manually communicated to the communications network by the customer themselves, via the data transmission connection.

8. Procedure according to any one of Claims 1 to 6, **characterized in that** the card number of the SIM card is automatically communicated to the communications network via the data transmission connection.

9. Procedure according to any one of Claims 1 to 8, **characterized in that** the computer-aided dialogue is effected by the customer by means of voice commands or by means of the dial-tone multi-frequency procedure.

10. Procedure according to any one of Claims 1 to 9, **characterized in that**, in the context of the computer-aided dialogue, at least one query is effected for the purpose of verifying the identity of the customer.

11. Procedure according to any one of Claims 1 to 10, **characterized in that**, in the context of the computer-aided dialogue, at least one query is effected for the purpose of determining the feature.

12. Procedure according to any one of Claims 1 to 11, **characterized in that** the customer is notified about a successful enabling of the SIM card or about a successful changing of a feature through a short-message-service message or through an electronic mail.

13. Procedure according to Claim 12, **characterized in that** the set features are communicated to the customer in the notification.

14. Apparatus for executing a procedure for enabling a Subscriber Identity Module card, in short a SIM card, of a mobile telephone for use in a mobile telephony network for a mobile telephony customer, for a feature or for changing a feature for which the SIM card is enabled, wherein the apparatus comprises a communications network and can be dialled-up by the mobile telephony customer via a terminal,
**characterized in that**
- the communications network is not the mobile telephony network,
- the terminal is not the mobile telephone, and the apparatus has:
- means for establishing a data transmission connection from the terminal to a mobile telephony network operator, via the communications network,
- means for ascertaining the identity of the customer,
- means for performing a computer-aided dialogue with the customer, the dialogue comprising at least the ascertainment of the card number of the SIM card,
- means for communicating the identity of the customer, the card number of the SIM card and the feature to the mobile telephony network operator, via the data transmission connection, and
- means for inputting the communicated data into a databank of the network operator.

15. Apparatus according to Claim 14, **characterized in that** the apparatus comprises a communications network which has a central component for controlling certain network functions of the communications network.

16. Apparatus according to either of Claims 14 or 15, **characterized in that** the terminal is realized as a telephone.

17. Apparatus according to either of Claims 14 or 15, **characterized in that** the terminal is realized as a computer.

18. Apparatus according to Claim 17, **characterized in that** the computer is part of a computer network.

19. Apparatus according to Claim 18, **characterized in that** the computer network is realized as a worldwide data transmission and information network, most particularly as the Internet.

20. Apparatus according to any one of Claims 15 to 19, **characterized in that** the means for ascertaining the identity of the customer is realized as the central component of the communications network.

21. Apparatus according to any one of Claims 15 to 20, **characterized in that** the means for performing a computer-aided dialogue is realized as the central component of the communications network.

22. Apparatus according to any one of Claims 15 to 21, **characterized in that** the means for ascertaining the identity of the customer receive, via the data transmission connection, statements which the customer makes regarding his identity and transmits to the apparatus via the data transmission connection.

23. Apparatus according to any one of Claims 15 to 21, **characterized in that** the means for ascertaining the identity of the customer receive, via the data transmission connection, an identification number of the terminal, and ascertain the identity of the customer from the identification number.

24. Apparatus according to any one of Claims 14 to 23, **characterized in that** the means for performing the computer-aided dialogue have means for controlling the dialogue by means of voice commands or by means of a dial-tone multi-frequency procedure.

25. Apparatus according to any one of Claims 14 to 24, **characterized in that** the means for performing the computer-aided dialogue have means for verifying the identity of the customer.

26. Apparatus according to any one of Claims 14 to 25, **characterized in that** the means for performing the computer-aided dialogue have means for determining a feature.

27. Apparatus according to any one of Claims 14 to 26, **characterized in that** the apparatus has means for notifying the customer about a successful enabling of the SIM card or about a successful changing of a feature through a short-message-service message or through an electronic mail.

28. Apparatus according to Claim 27, **characterized in that** the means for notifying the customer communicate the set features in the notification.

## Revendications

1. Procédé pour la déconnexion d'une carte de Subscribe-Identify-Module, appelée carte SIM, d'un téléphone mobile pour l'utilisation dans un réseau de téléphonie mobile pour un client de téléphonie mobile pour une facilité offerte aux usagers ou pour la modification d'une facilité offerte aux usagers, pour lesquels la carte SIM est déconnectée, **caractérisé par** les étapes suivantes :
- choix d'un réseau de communication, qui n'est pas le réseau de téléphonie mobile, par le client via un terminal qui n'est pas le téléphone mobile,
- établissement d'une liaison de transmission de données du terminal à un exploitant du réseau de téléphonie mobile via le réseau de communication,
- détermination de l'identité du client,
- réalisation d'un dialogue assisté par ordinateur, qui comprend au moins la détermination du numéro de carte de la carte SIM,
- transmission de l'identité du client, du numéro de carte de la carte SIM et de la facilité offerte aux usagers à l'exploitant du réseau de téléphonie mobile via la liaison de transmission de données, et
- entrée des données transmises dans une banque de données de l'exploitant du réseau de téléphonie mobile.

2. Procédé selon la revendication 1, **caractérisé en ce que** un composant central pour la commande de certaines fonctions du réseau dans le réseau de communication est choisi via le terminal et une liaison est établie avec le composant central.

3. Procédé selon la revendication 2, **caractérisé en ce que** l'identité du client est déterminée dans le composant central, **en ce que** le dialogue assisté par ordinateur se déroule sur le composant central et/ou l'identité du client, le numéro de carte de la carte SIM et la facilité offerte aux clients sont transmis du composant central à l'exploitant du réseau de téléphonie mobile.

4. Procédé selon l'une quelconque de la revendication 1 à 3, **caractérisé en ce qu'**un numéro de téléphone de téléphonie mobile est attribué à la carte SIM lors de la déconnexion.

5. Procédé selon l'une quelconque des revendications 2 à 4, **caractérisé en ce que** l'identité du client est transmise manuellement par le client même via la liaison de transmission de données au réseau de communication.

6. Procédé selon l'une quelconque des revendications 2 à 4, **caractérisé en ce qu'**un numéro d'identification du terminal est transmis via la liaison de transmission de données au réseau de communication et **en ce que** l'identité du client est déterminée par le composant central du réseau de communication à partir du numéro d'identification.

7. Procédé selon l'une quelconque des revendications 1 à 6, **caractérisé en ce que** le numéro de carte de la carte SIM est transmis manuellement par le client même via la liaison de transmission de données au réseau de communication.

8. Procédé selon l'une quelconque des revendications 1 à 6, **caractérisé en ce que** le numéro de carte de la carte SIM est transmis automatiquement via la liaison de transmission de données au réseau de communication.

9. Procédé selon l'une quelconque des revendications 1 à 8, **caractérisé en ce que** le dialogue assisté par ordinateur est effectué par le client au moyen d'instructions vocales ou au moyen du procédé Dial-Tone-Multi-Frequency.

10. Procédé selon l'une quelconque des revendications 1 à 9, **caractérisé en ce qu'**au moins une interrogation pour la vérification de l'identité du client est effectuée dans le cadre du dialogue assisté par ordinateur.

11. Procédé selon l'une quelconque des revendications 1 à 10, **caractérisé en ce qu'**au moins une interrogation pour la détermination de la facilité offerte aux clients est effectuée dans le cadre du dialogue assisté par ordinateur.

12. Procédé selon l'une quelconque des revendications 1 à 11, **caractérisé en ce que** le client est informé d'une déconnexion réussie de la carte SIM ou d'une modification réussie d'une facilité offerte aux clients par un message du Short-Message-Service ou par un Electronic mail.

13. Procédé selon la revendication 12, **caractérisé en ce que** les facilités réglées offertes aux clients sont transmises au client dans l'information.

14. Dispositif pour la mise en oeuvre d'un procédé pour la déconnexion d'une carte de Subscribe-Identify-Module, en abrégé carte SIM, d'un téléphone mobile pour l'utilisatinn dans un réseau de téléphonie mobile pour un client de téléphonie mobile pour une facilité offerte au client ou pour la modification d'une facilité offerte aux clients pour laquelle la carte SIM est déconnectée, le dispositif comprenant un réseau de communication et pouvant être choisi via un terminal par le client de téléphonie mobile, **caractérisé en ce que**
- le réseau de communication n'est pas le réseau de téléphonie mobile,
- le terminal n'est pas le téléphone mobile, et le dispositif présente :
- des moyens pour l'établissement d'une liaison de transmission de données du terminal à un exploitant du réseau de téléphonie mobile via le réseau de communication,
- des moyens pour la détermination de l'identité du client,
- des moyens pour la réalisation d'un dialogue assisté par ordinateur avec le client, le dialogue comprenant au moins la détermination du numéro de carte de la carte SIM,
- des moyens pour la détermination de l'identité du client, du numéro de carte de la carte SIM et de la facilité offerte aux clients à l'exploitant du réseau de téléphonie mobile via la liaison de transmission de données, et
- des moyens pour l'entrée des données transmises dans une banque de données de l'exploitant du réseau.

15. Dispositif selon la revendication 14, **caractérisé en ce que** le dispositif comprend un réseau de communication qui présente un composant central pour la commande de certaines fonctions du réseau du réseau de communication.

16. Dispositif selon la revendication 14 ou 15, **caractérisé en ce que** le terminal est conçu comme un téléphone.

17. Dispositif selon la revendication 14 ou 15, **caractérisé en ce que** le terminal est conçu comme un ordinateur.

18. Dispositif selon la revendication 17, **caractérisé en ce que** l'ordinateur est une partie d'un réseau d'ordinateur.

19. Dispositif selon la revendication 18, **caractérisé en ce que** le réseau d'ordinateur est conçu comme un réseau mondial de transmission de données et d'information, en particulier comme Internet.

20. Dispositif selon l'une quelconque des revendications 15 à 19, **caractérisé en ce que** les moyens pour la détermination de l'identité du client sont conçus comme le composant central du réseau de communication.

21. Dispositif selon l'une quelconque des revendications 15 à 20, **caractérisé en ce que** les moyens pour la réalisation d'un dialogue assisté par ordinateur sont conçus comme le composant central du réseau de communication.

22. Dispositif selon l'une quelconque des revendications 15 à 21, **caractérisé en ce que** les moyens pour la détermination de l'identité du client reçoivent via la liaison de transmission de données des indications que le client donne à propos de son identité, et qu'il transmet au dispositif via la liaison de transmission de données.

23. Dispositif selon l'une quelconque des revendications 15 à 21, **caractérisé en ce que** les moyens pour la détermination de l'identité du client reçoivent un numéro d'identification du terminal via la liaison de transmission de données et détermine l'identité du client à partir du numéro d'identification.

24. Dispositif selon l'une quelconque des revendications 14 à 23, **caractérisé en ce que** les moyens pour la réalisation du dialogue assisté par ordinateur présentent des moyens pour la commande du dialogue au moyen de la parole ou au moyen d'un procédé de Dial-Tone-Multi-Frequency.

25. Dispositif selon l'une quelconque des revendications 14 à 24, **caractérisé en ce que** les moyens pour la réalisation du dialogue assisté par ordinateur présentent des moyens pour la vérification de l'identité du client.

26. Dispositif selon l'une quelconque des revendications 14 à 25, **caractérisé en ce que** les moyens pour la réalisation du dialogue assisté par ordinateur présentent des moyens pour la détermination d'une facilité offerte aux clients.

27. Dispositif selon l'une quelconque des revendications 14 à 26, **caractérisé en ce que** le dispositif présente des moyens pour l'information du client concernant une déconnexion réussie de la carte SIM ou concernant une modification réussie d'une facilité offerte au client par un message du Short-Message-Service ou par un Electronic mail.

28. Dispositif selon la revendication 27, **caractérisé en ce que** les moyens pour l'information du client transmettent dans l'information les facilités réglées offertes aux clients.
